# EUROPEAN PATENT APPLICATION

(11) **EP 4 353 694 A1**
(43) Date of publication of application: **17.04.2024**
(21) Application number: 22820323.8
(22) Date of filing: 09.06.2022
(51) Int. Cl.: C03C 17/32, C09D 7/20, C09D 129/14, C09D 183/04

(54) **TRANSPARENT ARTICLE WITH ANTI-FOG FILM FOR SECURITY CAMERA, AND SECURITY CAMERA**

(30) Priority: 11.06.2021 JP 2021098341
(71) Applicant: NIPPON SHEET GLASS COMPANY, LIMITED, Tokyo 108-6321 (JP)
(72) Inventor: OYA, Kazuaki, Tokyo 108-6321 (JP); HAYASHI, Kiyomi, Tokyo 108-6321 (JP); TAKAHASHI, Koji, Tokyo 108-6321 (JP)
(74) Representative: Cabinet Beau de Loménie
(86) International application number: PCT/JP2022/023354
(87) International publication number: WO 2022/260144

(57) **Abstract**

The present invention provides an antifog-film-attached transparent article for security cameras that includes: a transparent base; and an antifog film on a surface of the transparent base, wherein the antifog film includes: at least one selected from the group consisting of a silane coupling agent and a cross-linked structure derived from the silane coupling agent; a water-absorbing polymer; a polyether-modified siloxane; and a C₂-C₈ diol.

## Description

### TECHNICAL FIELD

The present invention relates to an antifog-film-attached transparent article for security cameras and a security camera.

### BACKGROUND ART

Transparent bases typified by glass sheets may have antifog films formed thereon in order to impart antifog properties. For example, Patent Literature 1 discloses an antifog film containing a polyvinyl acetal resin, which is a water-absorbing polymer, and a silica component such as colloidal silica.

### CITATION LIST

### Patent Literature

Patent Literature 1: JP 2012-117025 A

### SUMMARY OF INVENTION

### Technical Problem

According to studies by the present inventors, however, conventional antifog films are not suitable for maintaining the imaging function of security cameras for which the demand has been increasing. In view of this, the present invention aims to provide an antifog-film-attached transparent article suitable for use in security cameras.

### Solution to Problem

In the present description, the mention of QR code being a registered trademark is hereinafter omitted.

The present invention provides an antifog-film-attached transparent article for security cameras, the antifog-film-attached transparent article including:
a transparent base; and
an antifog film on a surface of the transparent base, wherein
in a test in which:
   the antifog-film-attached transparent article is immersed in water at 25°C for 24 hours and removed from the water;
   subsequently the antifog film is exposed for 30 seconds to water vapor generated from water at 90°C to 100°C disposed at a distance of 60 mm from the antifog film downward in a vertical direction; and
   subsequently a judgment is made as to whether information of a QR code disposed at a distance of 110 mm from the antifog film downward in the direction is readable with a camera from an opposite side to a formation side of the antifog film,
information of a QR code of a 40 mm square size is readable
where the QR code is a two-dimensional code obtained by encoding, as the information, a character string "Rank:B" under a symbol size of 21 × 21 modules and a specification of error correction level H, in accordance with Japanese Industrial Standards (JIS) X 0510: 2018.

In another aspect, the present invention provides an antifog-film-attached transparent article for security cameras, the antifog-film-attached transparent article including:
a transparent base; and
an antifog film on a surface of the transparent base, wherein
the antifog film includes a water-absorbing polymer, and
when a test is performed in which: the antifog-film-attached transparent article is immersed in water at 25°C for 24 hours and removed from the water; and subsequently the antifog film is exposed for 30 seconds to water vapor generated from water at 90°C to 100°C disposed at a distance of 60 mm from the antifog film downward in a vertical direction,
a transparent continuous film is formed on a surface of the antifog film exposed to the water vapor.

In still another aspect, the present invention provides an antifog-film-attached transparent article for security cameras, the antifog-film-attached transparent article including:
a transparent base; and
an antifog film on a surface of the transparent base, wherein
the antifog film includes:
   at least one selected from the group consisting of a silane coupling agent and a cross-linked structure derived from the silane coupling agent;
   a water-absorbing polymer;
   a polyether-modified siloxane; and
   a C₂-C₈ diol.

In yet another aspect, the present invention provides a security camera including:
a camera; and
the antifog-film-attached transparent article for security cameras according to the present invention disposed in front of a lens of the camera.

### Advantageous Effects of Invention

The present invention provides an antifog-film-attached transparent article suitable for maintaining the imaging function of security cameras.

### BRIEF DESCRIPTION OF DRAWINGS

FIG. 1 is a cross-sectional view showing an example of an antifog-film-attached transparent article according to an embodiment of the present invention.
FIG. 2 is a cross-sectional view showing another example of the antifog-film-attached transparent article according to the embodiment.
FIG. 3 is a schematic view showing an example of a security camera according to the embodiment.
FIG. 4 is a schematic view showing another example of the security camera according to the embodiment.
FIG. 5A is a schematic view for illustrating the outline of a high-temperature water vapor evaluation.
FIG. 5B is another schematic view for illustrating the outline of the high-temperature water vapor evaluation.
FIG. 6A shows a QR code example (10 mm × 10 mm size, recorded information "Rank:SSS") used for the high-temperature water vapor evaluation.
FIG. 6B shows a QR code example (15 mm × 15 mm size, recorded information "Rank:SS") used for the high-temperature water vapor evaluation.
FIG. 6C shows a QR code example (20 mm × 20 mm size, recorded information "Rank:S") used for the high-temperature water vapor evaluation.
FIG. 6D shows a QR code example (30 mm × 30 mm size, recorded information "Rank:A") used for the high-temperature water vapor evaluation.
FIG. 6E shows a QR code example (40 mm × 40 mm size, recorded information "Rank: B") used for the high-temperature water vapor evaluation.

### DESCRIPTION OF EMBODIMENT

An embodiment of the present invention will be described below with reference to the drawings as appropriate. The present invention is not limited to the following embodiment. In the present description, a "main component" refers to a component contained in the highest content among the components contained. Furthermore, "principal surfaces" of a plate-shaped article refer to two surfaces facing away from each other at a predetermined distance, called the thickness.

As disclosed in Patent Literature 1, antifog films often have blended thereto a water-absorbing polymer. A higher water-absorbing polymer content can be expected to enhance the antifog properties of the films. On the other hand, a higher water-absorbing polymer content usually decreases the abrasion resistance of the films. Accordingly, as disclosed in Patent Literature 1, antifog films often have added thereto an inorganic component that compensates for a decrease in abrasion resistance, typically a silica component such as colloidal silica. Antifog-film-attached transparent articles that achieve a high abrasion resistance as well as antifog properties are suitable for use as window panes for automobiles. In contrast, transparent articles for use together with security cameras are not required to have a high-level abrasion resistance. It is appropriate to proceed with development of antifog-film-attached transparent articles for security cameras from a perspective different from that of antifog-film-attached transparent articles for automobiles.

An emphasis for antifog-film-attached transparent articles for security cameras that should be placed on is that even a long-time exposure of antifog films to a harsh environment does not impair the imaging function of security cameras. An antifog-film-attached transparent article according to the present embodiment has been achieved through further studies made from such a perspective, and can exhibit a function of transmitting light without scattering at a high level even when the antifog film is exposed to a harsh environment.

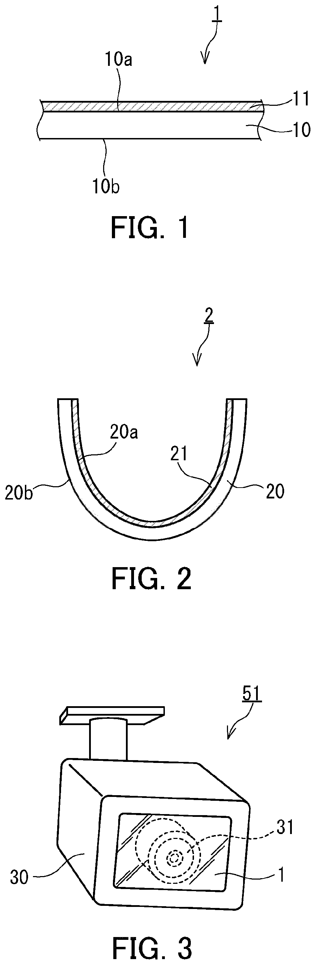

FIG. 1 is a cross-sectional view showing the antifog-film-attached transparent article according to the present embodiment. An antifog-film-attached transparent article 1 includes a plate-shaped transparent base 10, that is, a transparent substrate, and an antifog film 11 formed on the surface of the transparent base 10. The antifog film 11 is formed on at least a portion of a surface of the transparent base 10, for example, a principal surface of the transparent base 10. The antifog film 11 may be formed on both principal surfaces 10a and 10b of the plate-shaped transparent base 10, or may be formed only on the one principal surface 10a as shown in FIG. 1.

### [Transparent base]

The transparent base 10 only needs to be transparent, and its shape and material are not particularly limited. The transparent base 10 may be made of glass or a resin. The transparent base 10 is, for example, a glass sheet or a resin sheet. The following describes a glass sheet and a resin sheet as typical transparent bases 10.

### (Glass sheet)

The glass composition of the glass sheet is not particularly limited, and may be soda-lime glass, aluminosilicate glass, borosilicate glass, alkali-free glass, or even multicomponent glass called C-glass, E-glass, etc. The multicomponent glass contains SiO₂ as the main component, and further contains a component other than SiO₂, for example, at least one oxide selected from the group consisting of B₂O₃, Al₂O₃, MgO, CaO, Li₂O, Na₂O, and K₂O. The glass sheet, however, may be made of silica glass.

The glass sheet may be float glass. Float glass is shaped by a so-called float process. Since float glass is shaped in a float bath with one principal surface in contact with molten tin, the tin becomes diffused over the one principal surface. Accordingly, one principal surface, called a bottom surface, of float glass has a surface layer formed of tin diffused thereon, whereas the other principal surface, called a top surface, does not have such a surface layer. From another perspective, the tin concentration in float glass is higher on one principal surface than on the other principal surface. The glass sheet, however, may be shaped by a manufacturing process other than the float process, for example, the overflow downdraw process.

In the case where float glass is used as the transparent base, the antifog film is desirably formed on the bottom surface of the float glass. Accordingly, in the case where the transparent base 10 in FIG. 1 is float glass, the principal surface 10a is preferably the bottom surface though it may be the top surface. The bottom surface has more hydroxy groups than the top surface, and accordingly is suitable as the surface on which an antifog film having an excellent water resistance is to be formed.

The thickness of the glass sheet is, for example, 0.5 to 7.0 mm, and may be 0.5 to 5.0 mm. In the case where impact resistance should be emphasized, the glass sheet that is non-strengthened glass has a thickness of preferably 3.5 mm or more. Note that the glass sheet that is strengthened glass having a thickness of 1.8 mm or more can have a sufficient impact resistance. The strengthened glass may be either thermally strengthened glass or chemically strengthened glass.

### (Resin sheet)

The resin material of the resin sheet is not particularly limited, and its examples include acrylic resins such as methacryl resin (PMMA), polycarbonate (PC), acrylonitrile/styrene resin (AS), acrylonitrile/butadiene/styrene resin (ABS), cycloolefin polymer (COP), vinyl chloride (PVC), triacetyl cellulose (TAC), polyethylene terephthalate (PET), and urethane. The thickness of the resin sheet is, for example, 0.5 to 7.0 mm and may be 0.5 to 5.0 mm. In the case where the resin is an acrylic resin, the thickness of the resin sheet is preferably 2.0 to 3.0 mm. In the case where the resin is polycarbonate, the thickness of the resin sheet is preferably 1.0 to 2.0 mm.

### (Shape etc. of transparent base)

As shown in FIG. 1, the transparent base 10 may have a flat plate shape whose principal surfaces are flat surfaces. The principal surfaces of the transparent base, however, may be curved surfaces. For example, the transparent base may be obtained by bending a flat-plate-shaped transparent substrate. The transparent base may be a shaped body having curved surfaces obtained not by shaping from a flat-plate-shaped transparent substrate but by directly shaping from a molten material. FIG. 2 shows an example of such a shaped body.

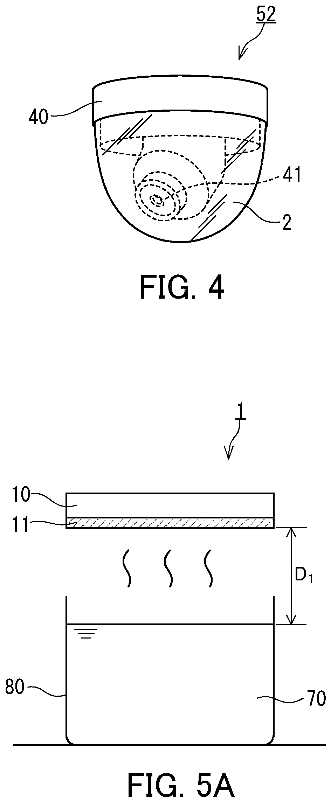

A transparent base 20 shown in FIG. 2 has principal surfaces that are both curved surfaces, and one principal surface 20a is a concave surface, and the other principal surface 20b is a convex surface. On the front surface of the principal surface 20a, which is a concave surface, an antifog film 21 is formed. The principal surface 20a faces the lens of a security camera that is not shown in the figure. The transparent base 20 has a dome shape, and the inside of the dome shape can be used as a space in which the lens of the security camera is to be placed (see FIG. 4). In other words, the transparent base 20 has a concave surface facing the space in which the lens of the security camera is to be placed.

On the principal surface of the transparent base, an underlying film may be formed. In this case, the underlying film is interposed between the surface of the transparent base and the antifog film. The underlying film is not particularly limited, and may be, for example, a barrier film preventing elution of an alkali metal from the glass. The barrier film is, for example, a silica film.

In the case where the antifog film is formed only on one principal surface of the transparent base, a film other than the antifog film may be formed on the other principal surface. Examples of such a film include an antireflection film, a water-repellent film, a hydrophilic film, and a colored film.

### [Antifog film]

The film thickness of each of the antifog films 11 and 21 is not limited to a specific value, and is 0.1 to 10 µm, preferably 0.5 to 5.0 µm, and particularly preferably 0.8 to 2.0 µm.

The antifog films 11 and 21 each include, for example: a silane coupling agent and/or a cross-linked structure derived from the silane coupling agent; a water-absorbing polymer; a polyether-modified siloxane; and a C₂-C₈ diol. The components each will be described below.

### (Water-absorbing polymer)

Examples of the water-absorbing polymer include at least one selected from the group consisting of a urethane resin, an epoxy resin, an acrylic resin, a polyvinyl acetal resin, and a polyvinyl alcohol resin. Examples of the urethane resin include a polyurethane resin composed of a polyisocyanate and a polyol. Examples of the polyol include acrylic polyol and polyoxyalkylene-based polyol. Examples of the epoxy resin include glycidyl ether-based epoxy resin, glycidyl ester-based epoxy resin, glycidyl amine-based epoxy resin, and cyclic aliphatic epoxy resin. A preferred epoxy resin is cyclic aliphatic epoxy resin. A polyvinyl acetal resin (hereinafter, simply referred to as "polyvinyl acetal") that is a preferred water-absorbing polymer will be described below.

Polyvinyl acetal can be obtained by acetalization of polyvinyl alcohol through a condensation reaction with an aldehyde. The acetalization of polyvinyl alcohol should be performed by any known method, such as a precipitation method using an aqueous medium in the presence of an acid catalyst or a dissolution method using a solvent such as an alcohol. The acetalization can also be performed in parallel with saponification of polyvinyl acetate. The degree of acetalization is preferably 2 to 40 mol%, more preferably 3 to 30 mol%, particularly preferably 5 to 20 mol%, and in some cases preferably 5 to 15 mol%. The degree of acetalization can be measured, for example, by ¹³C nuclear magnetic resonance spectroscopy. Polyvinyl acetal having a degree of acetalization in the above range is suitable for forming an antifog film having a good water absorbency and a good water resistance.

The average degree of polymerization of polyvinyl alcohol is preferably 200 to 4500 and more preferably 500 to 4500. A higher average degree of polymerization is more advantageous in terms of forming an antifog film having a good water absorbency and a good water resistance. However, an excessively high average degree of polymerization excessively increases the solution viscosity, which may adversely affect the film formation. The degree of saponification of polyvinyl alcohol is preferably 75 to 99.8 mol%.

Examples of the aldehyde to be subjected to a condensation reaction with polyvinyl alcohol include aliphatic aldehydes such as formaldehyde, acetaldehyde, butyraldehyde, hexylcarbaldehyde, octylcarbaldehyde, and decylcarbaldehyde. The examples further include aromatic aldehydes including: benzaldehyde; 2-methylbenzaldehyde, 3-methylbenzaldehyde, 4-methylbenzaldehyde, and other alkyl-substituted benzaldehydes; chlorobenzaldehyde and other halogen-substituted benzaldehydes; substituted benzaldehydes in which a hydrogen atom is substituted by a functional group other than an alkyl group, such as a hydroxy group, an alkoxy group, an amino group, or a cyano group; and condensed aromatic ring aldehydes such as naphthaldehyde and anthraldehyde. Aromatic aldehydes, which are highly hydrophobic, are advantageous in terms of forming a water-absorbing film having a low degree of acetalization and an excellent water resistance. Using aromatic aldehydes is advantageous also in terms of forming a highly water-absorbing film with a large amount of a hydroxy group remained. Polyvinyl acetal preferably contains an acetal structure derived from an aromatic aldehyde, particularly from benzaldehyde.

The content of the water-absorbing polymer in the antifog film is, for example, 45 to 95 mass%, preferably 55 to 85 mass%, and more preferably 65 to 80 mass%. The water-absorbing polymer may be the main component of the antifog film.

### (Polyether-modified siloxane)

The polyether-modified siloxane is a compound having a polyether chain as at least one selected from the group consisting of a molecular chain bonded to a terminal of a main chain of siloxane and a molecular chain bonded as a side chain of the main chain of siloxane. Siloxane is a compound having a siloxane bond (Si-O-Si) as a skeleton. The structural unit of the polyether chain is not particularly limited, and is, for example, ethylene oxide or propylene oxide. The polyether chain may include, as the structural unit, only one structural unit or two or more structural units.

The polyether-modified siloxane may be a polyether-modified silicone. Silicone is a polymer having a siloxane bond (Si-O-Si) as a skeleton. Examples of the polyether-modified silicone include BYK-345, BYK-347, and BYK-349 manufactured by BYK-Chemie GmbH and TSF-4440 manufactured by Momentive Performance Materials Inc.

The content of the polyether-modified siloxane in the antifog film is, for example, 2 to 30 mass%, preferably 5 to 25 mass%, and more preferably 8 to 20 mass%.

### (Diol)

A C₂-C₈ diol, in other words, a diol having 2 to 8 carbon atoms may include, for example, at least one selected from the group consisting of ethylene glycol, diethylene glycol, propylene glycol, dipropylene glycol, butanediol, pentanediol, and hexanediol. The diol may be a C₂-C₆ diol. Examples of a preferred diol include at least one selected from the group consisting of butanediol, propylene glycol, and dipropylene glycol. The antifog film may include, as a particularly preferred diol, propylene glycol and/or dipropylene glycol.

The content of the C₂-C₈ diol in the antifog film is, for example, 0.01 to 30 mass%, preferably 0.05 to 20 mass%, and more preferably 0.1 to 10 mass%.

### (Silane coupling agent and cross-linked structure derived therefrom)

Examples of the silane coupling agent include silicon compounds each having a hydrolyzable group represented by Formula (I). The silicon compounds each having a hydrolyzable group represented by Formula (I) may be used alone or in combination.

R-L-SiY₃₋ₙXₙ (I)

In Formula (I), n represents an integer of 1 to 3.

X is a hydrolyzable group or a halogen atom. Examples of the hydrolyzable group include at least one selected from the group consisting of an alkoxyl group, an acetoxy group, an alkenyloxy group, and an amino group. Examples of a preferred alkoxyl group include a C₁-C₄ alkoxyl group (a methoxy group, an ethoxy group, a propoxy group, and a butoxy group). Examples of a preferred halogen atom include chlorine.

Y is a C₁-C₃ alkyl group. Preferred alkyl groups are a methyl group and an ethyl group.

L is a hydrocarbon group. The hydrocarbon group is preferably an alkylene group. The carbon number of the hydrocarbon group is, for example, 1 to 10, preferably 1 to 6, and more preferably 1 to 3. Preferred examples of the hydrocarbon group include a methylene group, an ethylene group, an n-propylene group, an isopropylene group, a vinylene group, and a propenylene group.

R is a substituent or an optionally substituted hydrocarbon group. The carbon number of this hydrocarbon group is not particularly limited, and is, for example, 4 to 12, and may be 3 or less. The substituent may be a reactive functional group. The reactive functional group is, for example, at least one selected from the group consisting of an epoxy group, an amino group, a mercapto group, an isocyanate group, an acrylic group, and a methacrylic group, and is preferably at least one selected from the group consisting of an epoxy group and an amino group. The epoxy group may be included as a portion of a glycidyl ether group. An epoxy-containing silane coupling agent is also referred to as "epoxysilane". The amino group may be any of a primary amino group, a secondary amino group, and a tertiary amino group, and is preferably a primary amino group and a secondary amino group. An amino-containing silane coupling agent is also referred to as "aminosilane".

A compound in which X in Formula (I) is an alkoxyl group is called a silicon alkoxide. In Formula (I), n is preferably 2 or 3. That is, the silane coupling agent is preferably a bifunctional silicon alkoxide having a reactive functional group represented by R-L-SiY₁X₂ in Formula (I) or a trifunctional silicon alkoxide having a reactive functional group represented by R-L-SiX₃ in Formula (I).

Preferred specific examples of the bifunctional silicon alkoxide having a reactive functional group include a glycidoxyalkylalkyldialkoxysilane and an aminoalkylalkyldialkoxysilane. Examples of the glycidoxyalkylalkyldialkoxysilane include 3-glycidoxypropylmethyldimethoxysilane and 3-glycidoxypropylmethyldiethoxysilane. Examples of the aminoalkylalkyldialkoxysilane include N-2-(aminoethyl)-3-aminopropylmethyldimethoxysilane and N-2-(aminoethyl)-3-aminopropylethyldiethoxysilane.

Preferred specific examples of the trifunctional silicon alkoxide having a reactive functional group include a glycidoxyalkyltrialkoxysilane and an aminoalkyltrialkoxysilane. Examples of the glycidoxyalkyltrialkoxysilane include 2-(3,4-epoxycyclohexyl)ethyltrimethoxysilane, 3-glycidoxypropyltrimethoxysilane (GPTMS), and 3-glycidoxypropyltriethoxysilane. Examples of the aminoalkyltrialkoxysilane include 3-aminopropyltrimethoxysilane (APTMS), 3-am inopropyltriethoxysilane (APTES), 3-triethoxysilyl-N-(1,3-dimethyl-butylidene)propylamine, 3-(N-phenyl)aminopropyltrimethoxysilane, a hydrochloride of N-(vinylbenzyl)-2-aminoethyl-3-aminopropyltrimethoxysilane, N-2-(aminoethyl)-3-aminopropyltrimethoxysilane, and N-2-(aminoethyl)-3-am inopropyltriethoxysilane.

In the present embodiment, the silane coupling agent may be only at least one or two or more selected from the group consisting of the bifunctional silicon alkoxide having a reactive functional group and the trifunctional silicon alkoxide having a reactive functional group. The silane coupling agent can be preferably the trifunctional silicon alkoxide having a reactive functional group. The trifunctional silicon alkoxide having a reactive functional group may be only at least one or two or more selected from the group consisting of the glycidoxyalkyltrialkoxysilane and the aminoalkyltrialkoxysilane. The trifunctional silicon alkoxide having a reactive functional group can be preferably 3-glycidoxypropyltrimethoxysilane (GPTMS) and 3-aminopropyltriethoxysilane (APTES).

In the antifog film, at least a portion of the silane coupling agent reacts with a different component to form a cross-linked structure. Examples of the different component include an organic component such as the water-absorbing polymer and the hydroxy group on the surface of the base.

A particularly preferred silane coupling agent combination is a combination of an epoxy-containing silane coupling agent (epoxysilane) and an amino-containing silane coupling agent (aminosilane). The epoxysilane and the aminosilane are added in a mass ratio of, for example, preferably 1:3 to 3:1, and particularly preferably 1:2 to 2:1.

The content of the silane coupling agent in the antifog film is, for example, 2 to 35 mass%, preferably 5 to 30 mass%, and more preferably 8 to 25 mass%.

### (Additional components)

The antifog film may contain an ultraviolet absorber, an infrared absorber, a leveling agent (surface conditioner), a light stabilizer, and the like as appropriate in addition to the above components. These components, however, are added in desirably 20 mass% or less, more desirably 10 mass% or less, and particularly desirably 5 mass% or less, relative to the antifog film. The antifog film is not required to have a high abrasion resistance, and accordingly may or may not contain colloidal silica or other silica fine particles. The content of the silica fine particles in the antifog film may be, for example, 10 to 60 mass%, and may be limited to less than 5 mass%, even less than 3 mass%, or particularly less than 1 mass%. The content of oxide fine particles including silica fine particles may also be about the same as described above for the silica fine particles. The antifog film may or may not contain oxide fine particles typified by silica fine particles. Note that even in the case where the antifog film contains no silica fine particles, the antifog film can contain a siloxane component contained in the polyether-modified siloxane, the silane coupling agent, etc.

### [Properties of antifog-film-attached transparent article]

The antifog film according to the present embodiment can exhibit a function of transmitting transmission light without scattering at a high level, even after a long-time exposure to a harsh environment for antifog films, for example, contact with water. To exhibit this function, the antifog film desirably has, in addition to transparency and water absorbency, water resistance and even hydrophilicity. An antifog film having an insufficient water resistance may cause elution of its components when exposed to moisture for a long time. Furthermore, in the case where an antifog film has hydrophilicity to such an extent that at saturation of the water absorption by the antifog film, excess water is retained as a continuous film on the surface of the antifog film, transmission light can be transmitted without excessive scattering.

### (Transparency/Non-scattering properties of transmission light)

The antifog-film-attached transparent article according to the present embodiment can transmit transmission light without excessive scattering. Specifically, the antifog-film-attached transparent article can have a haze ratio of, for example, 5% or less, even 3% or less, particularly 1% or less, and in some cases, 0.4% or less. The haze ratio is specified in JIS K 7136: 2018.

### (Water resistance/Hydrophilicity)

The antifog-film-attached transparent article according to the present embodiment can have both water resistance and hydrophilicity. These properties can be evaluated by a method called a high-temperature water vapor evaluation which will be described in detail in the Examples section. This method supplies high-temperature and excessive water vapor to the antifog film with the antifog film turned vertically downward. When the antifog film is brought into contact with this water vapor, a transparent continuous film of water is formed on a portion directly exposed to the water vapor on the surface of the antifog film that is excellent in hydrophilicity and water resistance. Being a "transparent continuous film" can be determined by visually confirming that the continuity as a film, not water drops, is ensured and that the film has not become fogged. Fogging of a film can be caused by whitening of the film due to an insufficient water resistance or by dew condensation on the film surface due to insufficient antifog properties. On the surface of a film having an insufficient hydrophilicity, water is not retained as a continuous film but is dispersed and adhered as water drops. On a film having an insufficient water resistance, whitening of the film due to contact with high-temperature water vapor is observed, and elution of the components of the film, a defect of the film, or the like may occur. The hydrophilicity of the surface is evaluated typically by the contact angle of water. However, this evaluation method only drops an extremely small amount of water drops onto the film, and accordingly does not adequately reproduce a harsh environment. Additionally, the transparent continuous film may coat 80% or more or even 90% or more of the surface of the antifog film exposed to water vapor.

For a more detailed or more phased film evaluation, an information reading evaluation using a QR code can be performed. The details of this evaluation method will be described later in the Examples section as well. In this evaluation method, the antifog-film-attached transparent article according to the present embodiment even after immersion in water at room temperature for 24 hours can exhibit a good hydrophilicity to such an extent that it is possible to read preferably a QR code "A" of a 30 mm square size, more preferably a QR code "S" of a 20 mm square size, still more preferably a QR code "SS" of a 15 mm square size, and particularly preferably a QR code "SSS" of a 10 mm square size.

### [Formation of antifog film]

The antifog film can be formed by applying, onto the surface of the transparent base, a coating liquid for forming the antifog film, and heating the transparent base on which the coating film has been formed from the coating liquid. The solvent used for preparing the coating liquid and the application method for the coating liquid should be any conventionally known material and method. Examples of the application method include spin coating, roll coating, spray coating, dip coating, flow coating, screen printing, and brush coating. The coating film may be appropriately dried before the heating.

The heating temperature for the transparent base on which the coating film has been formed is not particularly limited, and is, for example, 100 to 180°C. The heating time is, for example, 5.0 minutes to 1 hour.

### [Security camera]

FIG. 3 shows an example of a security camera including the antifog-film-attached transparent article 1 according to the present embodiment. FIG. 4 shows an example of a security camera including the antifog-film-attached transparent article 2 according to the present embodiment. A security camera 51 shown in FIG. 3 includes a camera 31, a housing 30 for fixing the camera, and the antifog-film-attached transparent article 1. A security camera 52 shown in FIG. 4 includes a camera 41, a housing 40 for fixing the camera, and the antifog-film-attached transparent article 2.

Light incident on the lenses of the cameras 31 and 41 from the outside transmits through the respective antifog-film-attached transparent articles 1 and 2. On the sides facing the cameras 31 and 41, the respective antifog films are formed.

### Examples

The present invention will be described below in more detail with reference to examples. First, a method for evaluating antifog-film-attached transparent articles obtained in the examples and comparative examples will be described.

### (Water immersion test)

The antifog-film-attached transparent article was immersed in a plastic container containing pure water at room temperature (about 25°C) and held in this state for 24 hours. Subsequently, the antifog-film-attached transparent article was removed and leaned against a holder for drying. The sample dried was subjected to the following appearance evaluation and high-temperature water vapor evaluation.

### • Appearance evaluation

The state of the film surface was evaluated with the naked eye to determine which of the following is met.
G: No change from before the test is observed.
F: Some whitening is observed.
NG: Whitening is observed.
Y: Film elution is observed.

### • Antifog properties evaluation using high-temperature water vapor

### (High-temperature water vapor evaluation)

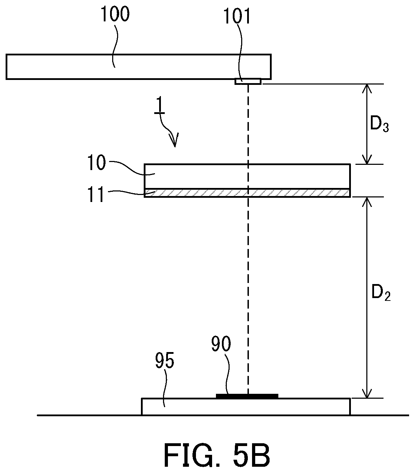

As shown in FIG. 5A, above a stainless-steel heat-retaining cup 80 containing boiled water 70, the antifog-film-attached transparent article 1 was held in a horizontal position so that the antifog film 11 formation side of the antifog-film-attached transparent article 1 faced the heat-retaining cup 80. While water vapor was supplied, the temperature of the water 70 was maintained at 90 to 100°C. A distance D₁ between the antifog film and the surface of the water was set to 60 mm. Additionally, the internal space of the heat-retaining cup 80 had a shape of a circular column with a 64-mm diameter opening, and the volume of the water 70 was set to about 130 cc. The antifog-film-attached transparent article 1 was held above the heat-retaining cup 80 for 30 seconds to supply high-temperature water vapor to the antifog film 11. Subsequently, as shown in FIG. 5B, the heat-retaining cup 80 was removed and a sheet 95 with a predetermined QR code 90 printed thereon was disposed instead. A distance D₂ between the antifog film 11 and the sheet 95 was set to 110 mm. In this state, the QR code 90 was photographed with a camera 100 from above through the antifog-film-attached transparent article 1 to check whether the information of the QR code 90 was readable. A distance D₃ between the transparent base 10 and a lens 101 of the camera 100 was set to 80 mm. The process from the removal of the heat-retaining cup 80, that is, the stop of the supply of the high-temperature water vapor, to the photographing of the QR code was performed within 30 seconds.

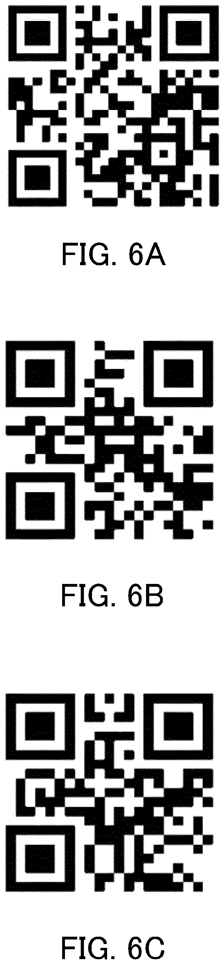

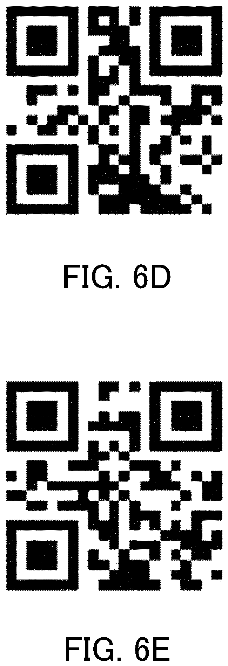

The QR codes used were of the five types shown in FIG. 6A to FIG. 6E. The QR code of the smallest size from which the information was readable was specified and determined as the evaluation results. The size and information of the QR codes used are as follows. For example, in the case where the QR code SSS is readable, character information "Rank:SSS" is displayed.
QR code "SSS": 10 mm × 10 mm, information "Rank:SSS" (FIG. 6A)
QR Code "SS": 15 mm × 15 mm, information "Rank:SS" (FIG. 6B)
QR Code "S": 20 mm × 20 mm, information "Rank:S" (FIG. 6C)
QR Code "A": 30 mm × 30 mm, information "Rank:A" (FIG. 6D)
QR Code "B": 40 mm × 40 mm, information "Rank:B" (FIG. 6E)

The case where none of the QR codes had been readable was evaluated as "X", and the case where the film had been eluted or peeled off due to contact with high-temperature water vapor was evaluated as "Y".

The QR code "SSS" shown in FIG. 6A was obtained by encoding, as the information, the above character string under a symbol size of 25 × 25 modules and a specification of error correction level H, in accordance with JIS X 0510: 2018. The respective QR codes "SS", "S", "A", and "B" shown in FIG. 6B to FIG. 6E are each obtained by encoding, as the information, the above character string under a symbol size of 21 × 21 modules and a specification of error correction level H, in accordance with JIS X 0510: 2018. Note that the character strings are each composed of not double-byte characters but single-byte characters (1-byte codes).

The camera used was smartphone "Xperia XZ2" manufactured by Sony Corporation (model name: SO-03K, OS: Android (registered trademark) (ver. 10)). For QR code reading, the QR code reading function of LINE (registered trademark) application (ver. 11.7.2) was used.

### (Example 1)

### (Preparation of coating liquid)

A coating liquid was prepared by putting the following materials into a glass container for stirring: 48.2 mass% of a polyvinyl acetal resin-containing solution ("S-LEC KX-5" manufactured by Sekisui Chemical Co., Ltd., a solid content of 8 mass%, a degree of acetalization of 9 mol%, and containing an acetal structure derived from benzaldehyde); 0.5 mass% of a polyether-modified siloxane ("BYK-345" manufactured by BYK-Chemie GmbH); 1.0 mass% of 3-aminopropyltriethoxysilane (APTES, "KBE-903" manufactured by Shin-Etsu Chemical Co., Ltd.); 0.7 mass% of 3-glycidoxypropyltrimethoxysilane (GPTMS, "KBM-403" manufactured by Shin-Etsu Chemical Co., Ltd.); 20.0 mass% of propylene glycol; 18.5 mass% of purified water; 11.0 mass% of an alcohol solvent ("Neoethanol P-7" manufactured by Daishin-Chemical Co., Ltd.); 0.1 mass% of hydrochloric acid; and 0.01 mass% of a leveling agent ("KP-341" manufactured by Shin-Etsu Chemical Co., Ltd.).

### (Formation of antifog film)

Onto the bottom surface of float glass (size: 50 mm × 50 mm, thickness: 1.1 mm) subjected in advance to alkaline cleaning, the coating liquid was applied by spin coating (at 1500 rpm for 10 seconds) to form a coating film. Next, the float glass on which the coating film had been formed was heated under conditions of 100°C and 30 minutes. Thus, an antifog-film-attached transparent article was obtained.

### (Examples 2 to 8)

Antifog-film-attached transparent articles were obtained in the same manner as in Example 1 except that the raw materials and amounts shown in Table 1 were used in the preparation of the coating liquid. Additionally, in Example 2, the amount of the alcohol solvent was increased by the amount of the epoxysilane decreased. In Example 3, the amount of the alcohol solvent was decreased by the amount of the polyether-modified siloxane increased. BYK-347, BYK-349, and BYK-3455 are polyether-modified silicones manufactured by BYK-Chemie GmbH, and TSF-4440 is a polyether-modified silicone manufactured by Momentive Performance Materials Inc.

### (Comparative Examples 1 to 10)

Antifog-film-attached transparent articles were obtained in the same manner as in Example 1 except that the raw materials and amounts shown in Table 2 were used in the preparation of the coating liquid. Additionally, "A-80" (RAPIDSOL A-80) used in Comparative Example 10 is a product name of a product manufactured by NOF CORPORATION. Furthermore, in Comparative Examples 1 to 6, the amount of the alcohol solvent was increased by the amount of the component that was not added.

The results of the water immersion test are shown in Tables 1 and 2.

**[Table 1]**

| Example | Water-absorbing polymer | Polyether-modified siloxane | | Diol | | Silane coupling agent | | Water immersion test | |
|---|---|---|---|---|---|---|---|---|---|
| | | | | | | Epoxysilane | Aminosilnane | Appearance | Hightemper ature water vapor |
| 1 | 48.2 | BYK-345 | 0.5 | PG | 20.0 | 0.7 | 1.0 | G | SSS |
| 2 | 48.2 | BYK-345 | 0.5 | PG | 20.0 | - | 1.0 | G | S |
| 3 | 48.2 | BYK-345 | 1.1 | PG | 20.0 | 0.7 | 1.0 | G | SSS |
| 4 | 48.2 | BYK-347 | 0.5 | PG | 20.0 | 0.7 | 1.0 | G | SS |
| 5 | 48.2 | BYK-349 | 0.5 | PG | 20.0 | 0.7 | 1.0 | G | SSS |
| 6 | 48.2 | TSF-4440 | 0.5 | PG | 20.0 | 0.7 | 1.0 | G | S |
| 7 | 48.2 | BYK-3455 | 0.5 | DPG | 20.0 | 0.7 | 1.0 | G | SSS |
| 8 | 48.2 | BYK-3455 | 0.5 | BG | 20.0 | 0.7 | 1.0 | G | SSS |

| | | | | | | | | | |
|---|---|---|---|---|---|---|---|---|---|
| • PG: propylene glycol, DPG: dipropylene glycol, BG: 1,3-butanediol (1,3-butylene glycol) • Numerical values in mass% | | | | | | | | | |

**[Table 2]**

| Compa r. Exampl e | Water-absorbi ng polymer | Polyether-modifi ed siloxane | | Diol | | Silane coupling agent | | Water immersion test | |
|---|---|---|---|---|---|---|---|---|---|
| | | | | | | Epoxysila ne | Aminosila ne | Appearan ce | High-temperatu re water vapor |
| 1 | 48.2 | - | - | - | - | 0.7 | - | G | X |
| 2 | 48.2 | - | - | PG | 20. 0 | 0.7 | - | G | X |
| 3 | 48.2 | - | - | - | - | 0.7 | 1.0 | G | X |
| 4 | 48.2 | BYK-345 | 0.5 | - | - | 0.7 | - | G | X |
| 5 | 48.2 | - | - | PG | 20. 0 | 0.7 | 1.0 | G | X |
| 6 | 48.2 | BYK-345 | 0.5 | - | - | 0.7 | 1.0 | G | X |
| 7 | 48.2 | BYK-345 | 0.5 | (PGME) | 20. 0 | 0.7 | 1.0 | Y | Y |
| 8 | 48.2 | BYK-345 | 0.5 | (MeOBtOH) | 20. 0 | 0.7 | 1.0 | Y | Y |
| 9 | 48.2 | BYK-345 | 0.5 | (MeOMeBtO H) | 20. 0 | 0.7 | 1.0 | Y | Y |
| 10 | 48.2 | (A-80) | 0.5 | PG | 20. 0 | 0.7 | 1.0 | G | X |

| | | | | | | | | | |
|---|---|---|---|---|---|---|---|---|---|
| • PG: propylene glycol, PGME: polyethylene glycol monomethylether, MeOBtOH: methoxybutanol, MeOMeBtOH: 3-methoxy-3-methyl-1-butanol, A-80 (RAPIDSOL A-80): di(2-ethylhexyl)sodium sulfosuccinate • Numerical values in mass% | | | | | | | | | |

The antifog-film-attached transparent articles according to the examples were each evaluated as any of "SSS" to "S" in the high-temperature water vapor evaluation performed after the water immersion test. In each of the antifog films of the transparent articles according to the examples, at the stop time point of the supply of high-temperature water vapor, a continuous film of water having a uniform thickness was formed on the surface of the antifog film, and the transparency of the antifog-film-attached transparent article was ensured while neither whitening of the film itself nor fogging due to dew condensation was observed. Additionally, the transparent continuous films of the examples, each of which was evaluated as any of "SSS" to "S", each coated 90% or more of the surface of the antifog film exposed to water vapor, more specifically, coated substantially the entirety of the above surface. In contrast, in each of Comparative Examples 7 to 9, the antifog film was eluted after the water immersion test. In each of Comparative Examples 1 to 6 and 10, at the stop time point of the supply of high-temperature water vapor, fogging due to dew condensation was observed or large water drops spread to adhere onto the surface of the antifog film was observed. Consequently, in these comparative examples, even the QR code of the largest size was not readable.

Moreover, the following evaluations were performed on Examples 1, 7, and 8 in order to check influence of a diol on the antifog films. The results are shown in Table 3.

**[Table 3]**

| Example | Diol | Initial state | | Repeated antifog test | | Alcohol abrasion test | |
|---|---|---|---|---|---|---|---|
| | | Appearance | Haze ratio (%) | Appearance | High-temperature water vapor | Appearance | High-temperature water vapor |
| 1 | PG | G | 0.03 | G | SSS | G | SSS |
| 7 | DPG | G | 0.11 | G | SSS | G | SSS |
| 8 | BG | G | 0.07 | G | SSS | G | SSS |

| | | | | | | | |
|---|---|---|---|---|---|---|---|
| • PG: propylene glycol, DPG: dipropylene glycol, BG: 1,3-butanediol (1,3-butylene glycol) | | | | | | | |

### (Initial state)

The antifog-film-attached transparent article in the initial state where the antifog film had been formed was subjected to an appearance evaluation in the same manner as described above, and furthermore subjected to a haze ratio measurement.

### (Repeated antifog test)

The antifog-film-attached transparent article in the initial state where the antifog film had been formed was subjected to supply of high-temperature water vapor to the antifog film in the same manner as in the high-temperature water vapor evaluation. Subsequently, the antifog-film-attached transparent article was removed and leaned against a holder for drying. The sample dried was again repeatedly subjected to supply of high-temperature water vapor to the antifog film and drying, where high-temperature water vapor was supplied to the antifog film 10 times. Subsequently, an appearance evaluation and a high-temperature water vapor evaluation were performed in the same manner as described above. Additionally, in the high-temperature water vapor evaluation, the QR code photographing was performed without performing the 11th water vapor supply (immediately after the completion of the 10th water vapor supply).

### (Alcohol abrasion test)

An amount of 0.5 cc of an alcohol solvent containing ethanol as the main component ("FineeterA-10" manufactured by FUTABA PURE CHEMICAL CO, LTD.) was dropped for impregnation onto a nonwoven fabric wiper ("BEMCOT M-3II" manufactured by Asahi Kasei Corporation) cut into a width of 25 mm, and then the wiper and the antifog-film-attached transparent article were set in a reciprocating abrasion tester. With a load of 400 g applied to the wiper, reciprocation for a length of 30 mm was performed 20 times. Subsequently, an appearance evaluation and a high-temperature water vapor evaluation were performed in the same manner as described above.

## Claims

1. An antifog-film-attached transparent article for security cameras, the antifog-film-attached transparent article comprising:
a transparent base; and
an antifog film on a surface of the transparent base, wherein
in a test in which:
the antifog-film-attached transparent article is immersed in water at 25°C for 24 hours and removed from the water;
subsequently the antifog film is exposed for 30 seconds to water vapor generated from water at 90°C to 100°C disposed at a distance of 60 mm from the antifog film downward in a vertical direction; and
subsequently a judgment is made as to whether information of a QR code disposed at a distance of 110 mm from the antifog film downward in the direction is readable with a camera from an opposite side to a formation side of the antifog film,
information of a QR code of a 40 mm square size is readable
where the QR code is a two-dimensional code obtained by encoding, as the information, a character string "Rank:B" under a symbol size of 21 × 21 modules and a specification of error correction level H, in accordance with Japanese Industrial Standards (JIS) X 0510: 2018.

2. An antifog-film-attached transparent article for security cameras, the antifog-film-attached transparent article comprising:
a transparent base; and
an antifog film on a surface of the transparent base, wherein
the antifog film includes a water-absorbing polymer, and
when a test is performed in which: the antifog-film-attached transparent article is immersed in water at 25°C for 24 hours and removed from the water; and subsequently the antifog film is exposed for 30 seconds to water vapor generated from water at 90°C to 100°C disposed at a distance of 60 mm from the antifog film downward in a vertical direction,
a transparent continuous film is formed on a surface of the antifog film exposed to the water vapor.

3. The antifog-film-attached transparent article for security cameras according to claim 1 or 2, wherein
the antifog film includes:
at least one selected from the group consisting of a silane coupling agent and a cross-linked structure derived from the silane coupling agent;
a water-absorbing polymer;
a polyether-modified siloxane; and
a C₂-C₈ diol.

4. An antifog-film-attached transparent article for security cameras, the antifog-film-attached transparent article comprising:
a transparent base; and
an antifog film on a surface of the transparent base, wherein
the antifog film includes:
at least one selected from the group consisting of a silane coupling agent and a cross-linked structure derived from the silane coupling agent;
a water-absorbing polymer;
a polyether-modified siloxane; and
a C₂-C₈ diol.

5. The antifog-film-attached transparent article for security cameras according to claim 3 or 4, wherein
the diol includes at least one selected from the group consisting of ethylene glycol, diethylene glycol, propylene glycol, dipropylene glycol, butanediol, pentanediol, and hexanediol.

6. The antifog-film-attached transparent article for security cameras according to claim 5, wherein
the diol includes at least one selected from the group consisting of butanediol, propylene glycol, and dipropylene glycol.

7. The antifog-film-attached transparent article for security cameras according to any one of claims 3 to 6, wherein
the water-absorbing polymer includes a polyvinyl acetal resin.

8. The antifog-film-attached transparent article for security cameras according to any one of claims 1 to 7, wherein
the transparent base is float glass, and
the antifog film is formed on a bottom surface of the float glass.

9. The antifog-film-attached transparent article for security cameras according to any one of claims 1 to 8, wherein
the transparent base has a concave surface adjacent to a space in which a lens of a security camera is to be placed.

10. A security camera comprising:
a camera; and
the antifog-film-attached transparent article for security cameras according to any one of claims 1 to 9 disposed in front of a lens of the camera.
